# FASCICULE DE BREVET EUROPEEN

(11) **EP 4 066 037 B1**
(45) Date de publication et mention de la délivrance du brevet: **27.12.2023**
(21) Numéro de dépôt: 21713730.6
(22) Date de dépôt: 01.03.2021
(51) Int. Cl.: G02B 7/18, G02B 23/06, G05D 23/27

(54) **INSTRUMENT OPTIQUE SPATIAL COMPRENANT UNE GARDE THERMIQUE AMÉLIORÉE**
OPTISCHES RAUMMESSGERÄT, DAS VERBESSERTEN WÄRMESCHUTZ UMFASST
SPACE OPTICAL INSTRUMENT COMPRISING IMPROVED THERMAL GUARD

(30) Priorité: 02.03.2020 FR 2002084
(43) Date de publication de la demande: 05.10.2022
(73) Titulaire: Airbus Defence and Space SAS, 31402 Toulouse Cedex 4 (FR)
(72) Inventeur: CHARVET, Didier, 31402 TOULOUSE Cedex 4 (FR); LE FOLL, Sébastien, 31402 TOULOUSE Cedex 4 (FR)
(74) Mandataire: Plasseraud IP
(86) Numéro de dépôt international: PCT/FR2021/050343
(87) Numéro de publication internationale: WO 2021/176169

(56) Documents cités:
- EP-A1- 2 161 605
- FR-A1- 2 894 037
- JP-A- H09 133 872
- KR-A- 20120 072 586
- US-A1- 2003 231 415

## Description

### Domaine technique

La présente demande concerne un instrument optique spatial comprenant un miroir primaire, et un dispositif de stabilisation thermique, également appelé garde thermique, de ce miroir primaire.

### Technique antérieure

Les satellites d'observation comprennent des instruments optiques de grande précision, comportant notamment un miroir primaire formant l'objectif principal de l'instrument optique. La distance focale du miroir primaire est définie par la géométrie du miroir, et doit rester constante tout au long de l'utilisation de l'instrument optique pour garantir un niveau de netteté satisfaisant pendant toute la durée de la mission.

Or, quel que soit le matériau utilisé pour sa fabrication, un miroir subit nécessairement une déformation mécanique sous l'effet des variations de son environnement thermique, qui provoque des variations de la température moyenne du miroir, des gradients de température radiaux liés à des gradients de température dans l'environnement externe, ou encore de gradients de température axiaux liés à des gradients de température entre les environnements avant et arrière du miroir.

De plus, un instrument optique spatial est soumis à de fortes variations de flux thermique incident sur le miroir primaire, en fonction par exemple de la saison ou du moment de la journée (jour ou nuit) et de la zone observée du fait de l'agilité du satellite (capacité à observer non pas uniquement dans la direction nadir, mais également au-delà de la trace du satellite par des modifications de l'attitude du satellite en roulis et tangage sur sa trajectoire). Dans certains cas, les variations de flux thermique peuvent être très rapides puisqu'un nuage passant au-dessus de la zone observée peut présenter un albédo plus important que la zone elle-même et accroître en quelques secondes, et pour une durée faible, le flux thermique incident sur le miroir primaire.

Pour éviter les déformations du miroir, il est connu de réaliser une stabilisation thermique du miroir en positionnant autour de celui-ci un dispositif de stabilisation thermique. Le dispositif de stabilisation thermique comprend notamment une paroi de forte inertie thermique, conçue pour amortir les variations de température au niveau de la face avant du miroir. C'est le cas par exemple du dispositif de protection décrit dans le document EP 1 955 100, dans lequel la paroi de forte inertie thermique est formée en aluminium d'environ 1 mm d'épaisseur. Cette inertie thermique permet d'amortir les variations de flux thermique incident et de limiter les fluctuations de température du miroir.

Un inconvénient de ce type de stabilisateur thermique est en premier lieu sa masse, puisque la forte inertie thermique implique une épaisseur importante de matériau et donc une masse embarquée importante pour le satellite.

Un autre inconvénient est que, bien qu'une telle protection thermique limite les fluctuations de température du miroir sur des temps longs (variations saisonnières, alternance jour/nuit), l'inertie thermique élevée de la paroi circonférentielle ne permet pas de s'adapter à des variations de flux thermique rapides, comme l'exemple décrit ci-avant où une couverture nuageuse passe sur la zone observée, ou lors d'un basculement qui peut modifier significativement la scène observée et l'environnement thermique associé en quelques dizaines de secondes.

Un autre instrument optique de l'art antérieur est divulgué dans le document EP2161605 A1.

### Résumé

Il existe donc un besoin pour améliorer la situation.

En particulier, la présente invention a pour but de proposer une stabilisation thermique de miroir primaire permettant une régulation plus réactive et plus précise de la température du miroir, et présentant une masse réduite.

A cet égard, l'invention propose un instrument optique défini dans la revendication 1.

Dans certains modes de réalisation, dans lequel la paroi thermiquement conductrice est adaptée pour présenter un ratio λ/Cₚ où λ est la conductivité thermique et Cₚ la capacité thermique, compris entre 0,5 et 2 kg/m/s à 20°C.

Dans certains modes de réalisation la paroi thermiquement conductrice est formée de carbone pyrolytique encapsulé dans du polyimide.

La paroi thermiquement conductrice peut être cylindrique de section circulaire centrée sur l'axe optique.

La paroi peut présenter une face orientée vers l'axe optique du miroir primaire et une face opposée, et la face orientée vers l'axe optique est adaptée pour présenter une émissivité dans le domaine du rayonnement infrarouge supérieure à 0.9.

Dans certains modes de réalisation, la face de la paroi orientée vers l'axe optique est du polyimide noir.

Dans certains modes de réalisation, la paroi comprend, sur sa face opposée à celle orientée vers l'axe optique, un revêtement thermiquement isolant.

Dans certains modes de réalisation, la paroi est adaptée pour présenter une conductivité thermique décroissante avec la distance au miroir primaire.

Dans un mode de réalisation, le capteur de flux thermique comprend une thermistance et une pièce support agencée pour recevoir un flux thermique représentatif du flux thermique reçu par le miroir primaire, et la thermistance est adaptée pour mesurer la température de la pièce support.

Dans certains modes de réalisation, le miroir primaire peut comporter un orifice traversant sur lequel est monté un diaphragme, et le capteur de flux thermique est monté sur le diaphragme. Dans ce cas, le dispositif de régulation de la température de la paroi thermiquement conductrice peut être adapté pour faire varier la température de ladite paroi en fonction de la température de la pièce support mesurée par la thermistance, pour maintenir constante ladite température de la pièce support.

Le contrôleur peut être de type proportionnel intégral.

Le dispositif de protection thermique peut comprendre en outre un dispositif de chauffage de la face arrière du miroir adapté pour assurer un chauffage constant de la face arrière.

L'instrument optique spatial proposé comprend un dispositif de stabilisation thermique plus léger et plus efficace que l'art antérieur, car la paroi de stabilisation présente une inertie thermique faible, de sorte qu'en commandant en temps réel le réchauffage de cette paroi, en fonction de variations de flux incident sur le miroir primaire, il est possible de maintenir la température du miroir primaire constante, et tout au moins de réduire ses variations, et de réduire les gradients de température dans le miroir.

La faible inertie thermique de la paroi permet également de l'alléger sensiblement par rapport aux parois à forte inertie thermique, par exemple en aluminium, de l'art antérieur.

### Brève description des dessins

D'autres caractéristiques, détails et avantages apparaîtront à la lecture de la description détaillée ci-après, et à l'analyse des dessins annexés, sur lesquels :
**Fig. 1**

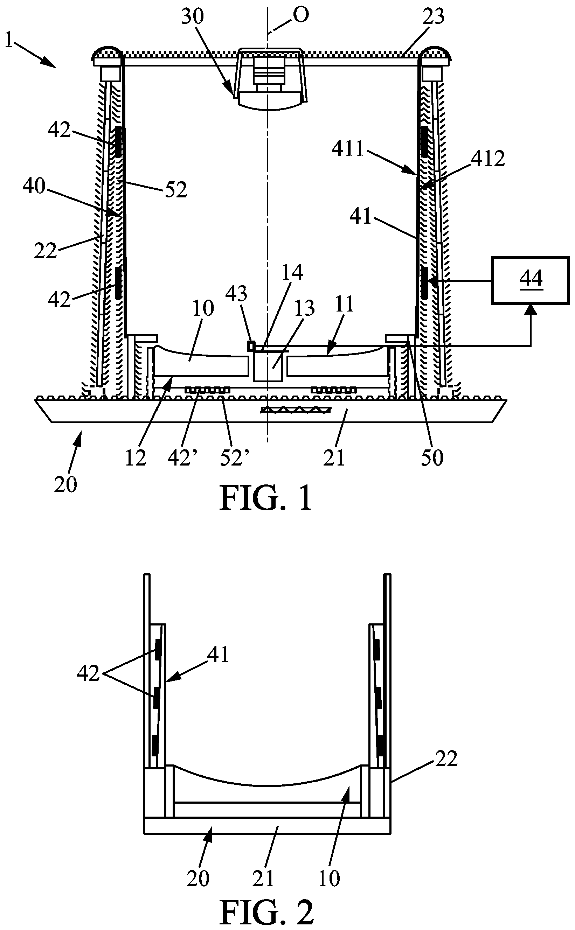

   [Fig. 1] représente schématiquement un exemple d'instrument optique spatial.
**Fig. 2**
   [Fig. 2] représente schématiquement un exemple de paroi d'un dispositif de stabilisation thermique.
**Fig. 3**

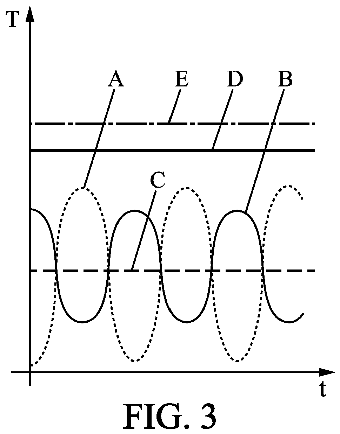

   [Fig. 3] schématiquement la régulation thermique du miroir primaire mise en oeuvre dans l'instrument optique spatial.

### Description des modes de réalisation

Il est maintenant fait référence à la figure 1, qui représente schématiquement un exemple d'un instrument optique spatial 1. Cet instrument peut par exemple être un télescope monté à bord d'un satellite. L'instrument 1 comprend un miroir primaire 10 comprenant un axe optique O, et monté sur l'instrument 1 au moyen d'une structure de support 20.

La structure de support 20 comprend une paroi de fond 21 et des parois latérales 22 définissant une cavité au fond de laquelle le miroir primaire est positionné. La structure de support peut également comprendre une partie supérieure 23, opposée à la paroi de fond 21, permettant de rigidifier la structure de support et optionnellement de supporter d'autres équipements comme un miroir secondaire décrit ci-après.

Le miroir primaire 10 est un élément majeur de l'instrument optique 1 qui ne peut être soustrait à l'influence de l'environnement thermique variable de la scène observée. Il comprend une première face 11, dite face avant, qui est orientée vers une zone observée, et peut donc être soumise à des variations importantes et rapides de flux thermique. Le miroir primaire 10 comprend également une deuxième face 12, opposée à la première, dite face arrière. Le matériau formant le miroir peut par exemple être de l'aluminium, du Carbure de Silicium SiC, du béryllium, du verre de type vitrocéramique connu sous le nom commercial Zerodur, ou encore du verre spécial dit ULE (Ultra Low Expansion). La taille du miroir primaire est quelconque.

L'instrument optique peut également comprendre un miroir secondaire 30 positionné de sorte que le miroir primaire réfléchisse des rayons lumineux entrants dans l'instrument optique selon l'axe optique du miroir primaire vers le miroir secondaire. Dans un mode de réalisation, l'instrument optique 1 peut être un télescope de type Cassegrain, ou de type Korsch. Le miroir primaire 10 comportant un orifice traversant 13 disposé au centre du miroir primaire ou légèrement excentré par rapport au centre, et le miroir secondaire étant positionné face au miroir primaire de sorte que les rayons réfléchis par le miroir primaire sur le miroir secondaire sont à nouveau réfléchis par ce dernier vers le miroir primaire 10 où ils traversent l'orifice traversant 13, pour être ensuite acheminés par d'éventuels autres équipements optiques (dans le cas d'un télescope de type Korsch : un troisième miroir de puissance) vers un système de détection (non représenté) de l'instrument optique.

L'instrument optique 1 comprend également un dispositif 40 de stabilisation thermique du miroir primaire 10. Celui-ci comprend une paroi 41 thermiquement conductrice, sensiblement cylindrique autour de l'axe optique O du miroir primaire, et s'étendant du côté de la face avant du miroir vers lequel cette face est orientée. La paroi 41 est avantageusement de section circulaire centrée sur l'axe O. « Sensiblement cylindrique » signifie que la paroi 41 peut être strictement cylindrique ou légèrement évasée, en fonction de la géométrie de la cavité dans laquelle le miroir primaire 10 est placé. La paroi 41 s'étend de préférence à partir de la face avant du miroir ou d'une structure annulaire 50 s'étendant autour du miroir primaire 10 et formant un diaphragme périphérique de celui-ci. De plus, la paroi 41 s'étend selon une longueur inférieure ou égale à la longueur des parois latérales 22 de la structure de support 20, de façon à être contenue dans la cavité. Dans un mode de réalisation, la paroi 41 peut être montée sur les parois latérales 22. En complément ou en alternative, la paroi 41 peut aussi être montée, à sa base, à la structure annulaire 50 formant un diaphragme. En complément ou en alternative, elle peut également s'étendre sur toute la longueur des parois latérales 22 de la structure de support et être fixée, à son extrémité opposée au miroir primaire, à la partie supérieure 23 de cette structure de support.

Le dispositif 40 de stabilisation thermique comprend en outre un dispositif de régulation de la température de la paroi thermiquement conductrice 41, adapté pour mesurer un flux thermique incident sur le miroir primaire, et pour chauffer la paroi 41 en adaptant la température de la paroi 41 en fonction du flux thermique incident mesuré, de sorte que la température de la paroi 41 permette de maintenir constante la température de la face avant du miroir. Ainsi, le dispositif de régulation de la température de la paroi 41 modifie la température de la paroi, en fonction du flux thermique incident sur le miroir, de sorte que la température au niveau de la face avant du miroir soit constante. Par exemple, si l'exposition de l'instrument optique amène une diminution du flux thermique incident sur le miroir, le dispositif de régulation est adapté pour élever la température de la paroi thermiquement conductrice 41 afin de compenser la baisse de flux thermique et de maintenir la température constante en face avant du miroir.

Pour cela, le dispositif de régulation thermique comprend avantageusement un ensemble de dispositifs 42 de chauffage de la paroi 41. Ces dispositifs de chauffage sont avantageusement répartis régulièrement sur la paroi 41 de façon à assurer un chauffage homogène de celle-ci. Dans un mode de réalisation, les dispositifs de chauffage 42 peuvent par exemple être rapportés sur la paroi et être adaptés pour chauffer la paroi par effet Joule. Dans un mode de réalisation, les dispositifs de chauffage peuvent être formés par des fils de cuivre noyés dans une bande de polyimide, connu sous le nom commercial de Kapton. La paroi 41 comprenant une face interne 410 tournée vers l'axe optique et une face externe 411, opposée à celle-ci, les dispositifs de chauffage sont rapportés sur la face externe de la paroi. De plus, pour que le chauffage assuré par ces dispositifs de chauffage ne perturbe pas le fonctionnement d'autres équipements du satellite, ou d'autres composants de l'instrument optique, la face externe de la paroi cylindrique ainsi que les dispositifs de chauffage sont avantageusement couverts d'un revêtement isolant 52, par exemple un isolant thermique multicouche (également dénommé par l'acronyme anglais MLI pour Multi Layer Insulation).

Le contrôle de l'intensité du courant électrique appliqué aux dispositifs de chauffage 42, par une source de courant (non représentée) permet de contrôler leur température et donc celle de la paroi.

De plus, la paroi 41 présente avantageusement une très faible inertie thermique, pour pouvoir réagir rapidement à des variations de température des dispositifs de chauffage, et une conductivité thermique importante, pour que l'ensemble de la paroi présente une température homogène et assure de ce fait une température homogène dans la cavité au fond de laquelle se trouve le miroir primaire.

L'inertie thermique de la paroi augmente avec la masse de la paroi, et donc avec son épaisseur, et avec la capacité calorifique du matériau formant la paroi. De fait, l'épaisseur de la paroi est avantageusement inférieure à 1 mm, par exemple inférieure à 0,5 mm, par exemple comprise entre 25 et 150 µm. Compte-tenu de cette épaisseur réduite, la paroi peut être souple, sa tenue mécanique étant apportée par la structure de support 20.

Par ailleurs, la paroi 41 thermiquement conductrice est avantageusement adaptée pour présenter une capacité thermique aussi faible que possible et une conductivité thermique aussi importante que possible. A cet égard, la paroi 41 est adaptée pour présenter un ratio λ/Cₚ, où λ est la conductivité thermique, et Cₚ est la capacité thermique compris entre 0,5 et 2 kg/m/s à 20°C, et plus avantageusement compris entre 1,1 et 2 kg/m/s à 20°C. Dans un mode de réalisation, la paroi est formée d'un seul matériau, et les valeurs ci-dessus s'appliquent au ratio λ/Cₚ du matériau. En variante, la paroi est un assemblage de plusieurs matériaux, et les valeurs ci-dessus s'appliquent à un ratio équivalent pour la paroi.

Enfin, la paroi 41 doit résister à l'illumination solaire, puisqu'il peut arriver que de façon brève l'instrument optique soit orienté de manière à recevoir des rayons lumineux du soleil, soit concentrés par la réflexion sur le miroir primaire uniquement, soit concentrés par la double réflexion sur le miroir primaire puis le miroir secondaire. La paroi 41 doit, compte-tenu de cette exposition possible à des rayons solaires concentrés, supporter une concentration de flux solaire incident d'au moins 100kW/m², de préférence d'au moins 150 kW/m², et plus avantageusement d'au moins 200 kW/m².

Dans un mode de réalisation, ces propriétés en termes de conductivité thermique, et capacité thermique et de tenue à l'illumination solaire, sont obtenues avec une paroi comprenant du carbone pyrolytique. Dans un mode de réalisation, la paroi peut comprendre du carbone pyrolytique encapsulé dans du polyimide ou kapton, par exemple entre deux films de polyimide, afin d'éviter la contamination de carbone pyrolytique sur le miroir primaire, et satisfaire aux normes de propreté particulaires applicables aux instruments optiques spatiaux.

Si l'instrument optique est un télescope de type Cassegrain ou Korsch, la configuration du miroir primaire implique qu'en cas d'illumination solaire, les rayons lumineux non parallèles à l'axe optique et incidents sur la paroi cylindrique seront proportionnellement plus nombreux vers l'extrémité de la paroi cylindrique située du côté du miroir primaire. Dans un mode de réalisation, la paroi cylindrique peut donc présenter une conductivité thermique supérieure vers le miroir primaire, c'est-à-dire maximale à son extrémité située du côté du miroir primaire, et décroissante avec la distance au miroir primaire.

Pour ce faire, la paroi cylindrique peut présenter une épaisseur variable le long de l'axe optique O du miroir primaire, l'épaisseur étant supérieure à l'extrémité de la paroi située du côté du miroir primaire, permettant à la paroi cylindrique de comprendre une quantité supérieure de carbone pyrolytique à proximité du miroir, et donc de présenter une conductivité thermique supérieure. Avantageusement, la face interne 410 de la paroi 41 peut être de couleur noire, soit en étant peinte en noire, soit en utilisant un matériau de couleur noire, par exemple du kapton noir. Ceci permet à la paroi de présenter une absorptivité importante dans le domaine du visible, et une émissivité thermique élevée dans le domaine des infrarouges (par exemple supérieure à 0,9 dans le cas du kapton noir). De plus, la face interne de couleur noire permet de réduire la lumière parasite dans le domaine du visible et assure un meilleur couplage thermique avec le miroir, permettant un meilleur asservissement du système de régulation.

Pour la régulation de la température de la paroi, le dispositif de régulation comprend en outre un capteur 43 de flux thermique sur le miroir primaire. Ce capteur 43 peut être adapté pour mesurer directement la puissance thermique qu'il reçoit. En variante, le capteur 43 peut comprendre une thermistance et une pièce support (non représentées) recevant un flux thermique représentatif du flux thermique reçu par le miroir, la thermistance mesurant la température de la pièce support pour en déduire le flux thermique reçu par le miroir. Par exemple, cette pièce support peut être montée sur le miroir ou, de préférence, sur un élément proche du miroir, en étant thermiquement découplée de cet élément. Cette pièce support présente une très faible inertie thermique, pour une meilleure réactivité du capteur. Par exemple, dans le cas d'un télescope de type Cassegrain, un diaphragme 14 est monté sur l'orifice traversant, et le capteur de flux thermique peut être avantageusement monté sur le diaphragme.

Enfin, le dispositif de régulation comprend également un contrôleur 44, adapté pour recevoir les données mesurées par le capteur 43 de flux thermique, et pour contrôler les dispositifs de chauffage 42 (par exemple par le contrôle d'un générateur de courant) pour maintenir constant le flux thermique mesuré par le capteur, et donc la température de la face avant du miroir. En variante, dans le cas où le capteur 43 comprend une thermistance et une pièce support, la régulation peut être mise en oeuvre pour maintenir constante la température de la pièce support du capteur 43. Le contrôleur 44 peut être de type proportionnel intégral (PI) ou proportionnel intégral dérivé (PID).

En référence à la figure 3, on a représenté ainsi schématiquement la régulation thermique mise en oeuvre par le dispositif de régulation thermique. La courbe A représente la température de l'environnement de la face avant du miroir primaire en l'absence de régulation thermique. La courbe B représente la température contrôlée de la paroi 41 et la courbe C représente la température de l'environnement de la face avant du miroir résultant de la courbe A et de la courbe B, dont on voit qu'elle est constante.

En complément, le dispositif de protection thermique du miroir peut également comprendre des dispositifs de chauffage 42' disposés à proximité de la face arrière du miroir pour chauffer cette dernière, les dispositifs de chauffage étant contrôlés - par exemple par le contrôleur 44 - pour fournir un chauffage constant de la face arrière du miroir. Comme précédemment pour les dispositifs de chauffage de la paroi cylindrique 41, ceux assurant le chauffage de la face arrière du miroir peuvent être couverts d'un revêtement isolant 52' de type MLI. De retour à la figure 3, ce chauffage constant en face arrière du miroir est représenté par la courbe E, et la température moyenne du miroir est représentée par la courbe D. Le chauffage constant de la face arrière du miroir permet de conserver cette face à température constante du fait du revêtement isolant et de la moindre exposition de cette face à des variations de flux thermique.

## Revendications

1. Instrument optique (1) spatial comprenant un miroir primaire (10) présentant un axe optique (O) et comprenant une première face (11) dite face avant orientée vers une zone observée, et une deuxième face (12) opposée à la première, dite face arrière,
l'instrument optique (1) comprenant en outre un dispositif (40) de stabilisation thermique du miroir primaire, comprenant une paroi thermiquement conductrice (41) s'étendant autour de l'axe optique (O) du côté de la face avant du miroir primaire (10) vers lequel cette face est orientée,
**caractérisé en ce que** le dispositif de stabilisation thermique (40) comprend en outre un dispositif de régulation de la température de la paroi thermiquement conductrice (41) adapté pour utiliser la mesure d'un flux thermique incident sur le miroir, et pour faire varier la température de ladite paroi (41) en fonction du flux thermique incident mesuré, afin de maintenir constante la température de la face avant du miroir, le dispositif de régulation comprenant un ensemble de dispositifs (42) de chauffage de la paroi thermiquement conductrice (41), un capteur (43) de flux thermique sur la face avant du miroir, et un contrôleur (44) adapté pour commander les dispositifs de chauffage en fonction du flux thermique mesuré par le capteur (43).

2. Instrument optique (1) selon la revendication 1, dans lequel la paroi thermiquement conductrice (41) est adaptée pour présenter un ratio λ/Cₚ où λ est la conductivité thermique et Cₚ la capacité thermique, compris entre 0,5 et 2 kg/m/s à 20°C.

3. Instrument optique (1) selon l'une des revendications 1 ou 2, dans lequel la paroi thermiquement conductrice (41) est formée de carbone pyrolytique encapsulé dans du polyimide.

4. Instrument optique (1) selon l'une des revendications 1 à 3, dans lequel la paroi (41) thermiquement conductrice est cylindrique de section circulaire centrée sur l'axe optique (O).

5. Instrument optique (1) spatial selon l'une des revendications précédentes, dans lequel la paroi (41) présente une face (410) orientée vers l'axe optique du miroir primaire et une face opposée (411), et la face orientée vers l'axe optique est adaptée pour présenter une émissivité dans le domaine du rayonnement infrarouge supérieure à 0.9.

6. Instrument optique (1) spatial selon la revendication précédente, dans lequel la face (410) de la paroi (41) orientée vers l'axe optique est du polyimide noir.

7. Instrument optique spatial selon l'une des revendications 5 ou 6, dans lequel la paroi (41) comprend, sur sa face (411) opposée à celle (410) orientée vers l'axe optique, un revêtement (52) thermiquement isolant.

8. Instrument optique (1) spatial selon l'une des revendications précédentes, dans lequel la paroi (41) est adaptée pour présenter une conductivité thermique décroissante avec la distance au miroir primaire.

9. Instrument optique (1) spatial selon la revendication 1, dans lequel le capteur (43) de flux thermique comprend une thermistance et une pièce support agencée pour recevoir un flux thermique représentatif du flux thermique reçu par le miroir primaire (10), et la thermistance est adaptée pour mesurer la température de la pièce support.

10. Instrument optique spatial (1) selon la revendication précédente, dans lequel le miroir primaire (10) comporte un orifice (13) traversant sur lequel est monté un diaphragme (14), et le capteur de flux thermique (43) est monté sur le diaphragme.

11. Instrument optique spatial (1) selon l'une des revendications 9 ou 10, dans lequel le dispositif de régulation de la température de la paroi thermiquement conductrice (41) est adapté pour faire varier la température de ladite paroi (41) en fonction de la température de la pièce support mesurée par la thermistance, pour maintenir constante ladite température de la pièce support.

12. Instrument optique spatial (1) selon l'une des revendications précédentes, dans lequel le contrôleur (44) est de type proportionnel intégral.

13. Instrument optique spatial (1) selon l'une des revendications précédentes, dans lequel le dispositif de protection thermique comprend en outre un dispositif de chauffage (42') de la face arrière du miroir adapté pour assurer un chauffage constant de la face arrière.

## Patentansprüche

1. Optisches Instrument (1) für den Einsatz im All, mit einem Primärspiegel (10), der eine optische Achse (O) aufweist und mit einer erste Seite (11), die Vorderseite, die zu einem beobachteten Bereich hin gewandt ist, und einer zweite Seite (12), die Rückseite, die der ersten gegenüberliegt,
wobei das optische Instrument (1) ferner eine Vorrichtung (40) zur thermischen Stabilisation des Primärspiegels aufweist, die eine wärmeleitende Wand (41) aufweist, die sich um die optische Achse (O) auf der Seite der Vorderseite des Primärspiegels (10) erstreckt, zu welchem diese Seite gewandt ist,
**dadurch gekennzeichnet, dass** die Vorrichtung zur thermischen Stabilisation (40) ferner eine Vorrichtung zur Regulierung der Temperatur der wärmeleitenden Wand (41) aufweist, die geeignet ist, um die Messung eines Wärmeflusses zu nutzen, der auf den Spiegel einfällt, und die Temperatur der Wand (41) in Abhängigkeit vom gemessenen einfallenden Wärmefluss zu verändern, um die Temperatur der Vorderseite des Spiegels konstant zu halten, wobei die Regulierungsvorrichtung eine Anordnung von Heizvorrichtungen (42) für die wärmeleitende Wand (41), einen Wärmeflusssensor (43) auf der Vorderseite des Spiegels und eine Steuerung (44) aufweist, die geeignet ist, um die Heizvorrichtungen in Abhängigkeit von dem Wärmefluss zu steuern, der vom Sensor (43) gemessen wird.

2. Optisches Instrument (1) nach Anspruch 1, wobei die wärmeleitende Wand (41) geeignet ist, um ein Verhältnis λ/Cₚ aufzuweisen, wobei λ die Wärmeleitfähigkeit und Cₚ die Wärmekapazität zwischen 0,5 und 2 kg/m/s bei 20°C ist.

3. Optisches Instrument (1) nach einem der Ansprüche 1 oder 2, wobei die wärmeleitende Wand (41) aus pyrolytischem Kohlenstoff gebildet ist, der in Polyimid eingekapselt ist.

4. Optisches Instrument (1) nach einem der Ansprüche 1 bis 3, wobei die wärmeleitende Wand (41) zylindrisch ist, mit kreisförmigem Querschnitt, der auf der optischen Achse (O) zentriert ist.

5. Optisches Instrument (1) für den Einsatz im All nach einem der vorhergehenden Ansprüche, wobei die Wand (41) eine Seite (410), die zur optischen Achse des Primärspiegels hin gewandt ist, und eine gegenüberliegende Seite (411) aufweist, und die Seite, die zur optischen Achse hin gewandt ist, geeignet ist, um ein Emissionsvermögen größer als 0.9 im Infrarotstrahlungsbereich aufzuweisen.

6. Optisches Instrument (1) für den Einsatz im All nach dem vorhergehenden Anspruch, wobei die Seite (410) der Wand (41), die zur optischen Achse hin gewandt ist, schwarzes Polyimid ist.

7. Optisches Instrument für den Einsatz im All nach einem der Ansprüche 5 oder 6, wobei die Wand (41) auf ihrer Seite (411), die jener (410) gegenüberliegt, die zur optischen Achse hin gewandt ist, eine wärmeisolierende Beschichtung (52) aufweist.

8. Optisches Instrument (1) für den Einsatz im All nach einem der vorhergehenden Ansprüche, wobei die Wand (41) geeignet ist, eine Wärmeleitfähigkeit aufzuweisen, die mit dem Abstand zum Primärspiegel abnimmt.

9. Optisches Instrument (1) für den Einsatz im All nach Anspruch 1, wobei der Wärmeflusssensor (43) einen Thermistor und ein Trägerteil aufweist, das dafür angeordnet ist, um einen Wärmefluss aufzunehmen, der für den Wärmefluss repräsentativ ist, der vom Primärspiegel (10) aufgenommen wird, und der Thermistor geeignet ist, um die Temperatur des Trägerteils zu messen.

10. Optisches Instrument (1) für den Einsatz im All nach dem vorhergehenden Anspruch, wobei der Primärspiegel (10) eine Durchgangsöffnung (13) aufweist, an der ein Diaphragma (14) angebracht ist, und der Wärmeflusssensor (43) an dem Diaphragma angebracht ist.

11. Optisches Instrument (1) für den Einsatz im All nach einem der Ansprüche 9 oder 10, wobei die Vorrichtung zur Regulierung der Temperatur der wärmeleitenden Wand (41) geeignet ist, um die Temperatur der Wand (41) in Abhängigkeit von der Temperatur des Trägerteils zu verändern, die vom Thermistor gemessen wird, um die Temperatur des Trägerteils konstant zu halten.

12. Optisches Instrument (1) für den Einsatz im All nach einem der vorhergehenden Ansprüche, wobei die Steuerung (44) vom proportional-integralen Typ ist.

13. Optisches Instrument (1) für den Einsatz im All nach einem der vorhergehenden Ansprüche, wobei die Wärmeschutzvorrichtung ferner eine Vorrichtung zur Beheizung (42') der Rückseite des Spiegels aufweist, die geeignet ist, um eine konstante Beheizung der Rückseite zu gewährleisten.

## Claims

1. Space optical instrument (1) comprising a primary mirror (10) having an optical axis (O) and comprising a first face (11), referred to as the front face, oriented towards an observed area, and a second face (12) opposite to the first, referred to as the rear face,
the optical instrument (1) further comprising a thermal stabilization device (40) for the primary mirror, comprising a thermally conductive wall (41) extending around the optical axis (O) on the front face side of the primary mirror (10) towards which this face is oriented, **characterized in that** the thermal stabilization device (40) further comprises a temperature regulating device for the thermally conductive wall (41), capable of using the measurement of an incident heat flux on the mirror and varying the temperature of said wall (41) according to the measured incident heat flux, in order to keep the front face of the mirror at a constant temperature, the temperature regulating device comprising a set of heating devices (42) for the thermally conductive wall (41), a heat flux sensor (43) on the front face of the mirror, and a controller (44) capable of controlling the heating devices according to the heat flux measured by the sensor (43).

2. Optical instrument (1) according to claim 1, wherein the thermally conductive wall (41) is adapted to have a ratio λ/Cₚ, where λ is the thermal conductivity and Cₚ the thermal capacity, of between 0.5 and 2 kg/m/s at 20°C.

3. Optical instrument (1) according to claim 1 or 2, wherein the thermally conductive wall (41) is formed of pyrolytic carbon encapsulated in polyimide.

4. Optical instrument (1) according to one of claims 1 to 3, wherein the thermally conductive wall (41) is cylindrical, having a circular cross-section centered on the optical axis (O).

5. Space optical instrument (1) according to one of the preceding claims, wherein the wall (41) has a face (410) oriented towards the optical axis of the primary mirror and an opposite face (411), and the face oriented towards the optical axis is capable of presenting an emissivity within the infrared range of radiation that is greater than 0.9.

6. Space optical instrument (1) according to the preceding claim, wherein the face (410) of the wall (41) oriented towards the optical axis is of black polyimide.

7. Space optical instrument according to one of claims 5 or 6, wherein the wall (41) comprises a thermally insulating coating (52) on its face (411) opposite to the face (410) oriented towards the optical axis.

8. Space optical instrument (1) according to one of the preceding claims, wherein the wall (41) is adapted to exhibit a thermal conductivity which decreases with distance from the primary mirror.

9. Space optical instrument (1) according to claim 1, wherein the heat flux sensor (43) comprises a thermistor and a support part that is arranged to receive a heat flux representative of the heat flux received by the primary mirror (10), and the thermistor is capable of measuring the temperature of the support part.

10. Space optical instrument (1) according to the preceding claim, wherein the primary mirror (10) comprises a through-hole (13) on which a diaphragm (14) is mounted, and the heat flux sensor (43) is mounted on the diaphragm.

11. Space optical instrument (1) according to one of claims 9 or 10, wherein the temperature regulating device for the thermally conductive wall (41) is capable of varying the temperature of said wall (41) according to the temperature of the support part measured by the thermistor, so as to keep the support part at a constant temperature.

12. Spatial optical instrument (1) according to any of the preceding claims, wherein the controller (44) is of the proportional-integral type.

13. Space optical instrument (1) according to one of the preceding claims, wherein the thermal protection device further comprises a heating device (42') for the rear face of the mirror, capable of ensuring a constant heating of the rear face.
